# EUROPEAN PATENT APPLICATION

(11) **EP 2 511 901 A2**
(43) Date of publication of application: **17.10.2012**
(21) Application number: 12151968.0
(22) Date of filing: 20.01.2012
(51) Int. Cl.: G09G 5/14

(54) **Displaying method and display apparatus using the same**

(30) Priority: 15.04.2011 KR 20110035398
(71) Applicant: Samsung Electronics Co., Ltd., Suwon-si, Gyeonggi-do, 443-742 (KR)
(72) Inventor: Kim, Yong-ku, Seoul (KR)
(74) Representative: Davies, Robert Ean

(57) **Abstract**

A method of displaying a graphic user interface (GUI) element in a display apparatus includes displaying at least one GUI element on a first window that is positioned on a screen; generating a second window on which a transition image element corresponding to an event for controlling the GUI element is displayed; and adding an animation effect to the GUI element by overlapping the second window with the first window.

## Description

### CROSS-REFERENCE TO RELATED PATENT APPLICATION

This application claims priority from Korean Patent Application No. 10-2011-0035398, filed on April 15, 2011 in the Korean Intellectual Property Office, the disclosure of which is incorporated herein in its entirety by reference.

### BACKGROUND

### 1. Field

Methods and apparatuses consistent with exemplary embodiments relate to a displaying method and a display apparatus using the same, and more particularly, to a displaying method of adding an animation effect to a graphic user interface (GUI) element, and a display apparatus using the displaying method.

### 2. Description of the Related Art

Recently, by virtue of the development of various multimedia devices, a GUI that uses a method of selecting items such as an icon or a menu by using a pointer has been already generalized. In addition, various animation effects are added to items such as icons or a menu in order to visually confirm a user's intent.

In the related art, in order to add animation effects to an item, a plurality of images in which only a state of an icon varies in a single graphic layer are sequentially displayed so as to add animation effects to a predetermined icon.

However, this method may have a side effect of shaking an icon to which an animation effect is not added. In addition, since a plurality of images for adding animation effects need to be stored for each respective icon, animation effects may be changed according to the specifications of a display apparatus. Thus, there is a need to prevent the side effect and to easily realize the animation effect in a display apparatus with low specifications.

### SUMMARY

Exemplary embodiments provide a displaying method of adding an animation effect by generating a separate window and overlapping the window with another window on which an icon, or the like is displayed, and a display apparatus using the displaying method.

According to an aspect of an exemplary embodiment, there is provided a method of displaying a GUI element in a display apparatus, the method including displaying at least one GUI element on a first window that is positioned on a screen; generating a second window on which a transition image element corresponding to an event for controlling the GUI is displayed; and adding an animation effect to the GUI element by overlapping the second window with the first window.

The transition image element may be displayed to have the same size in the same position as the GUI element on the second window so that a color of the GUI element appears to change to a predetermined pattern.

In this case, the adding of the animation effect may include adding the animation effect of sequentially changing color of the GUI element displayed on the first window by sequentially changing color of a transition image element displayed on the second window.

The transition image element may be displayed in a position corresponding to a shadow of the GUI element on the second window so that the shadow of the GUI element appears to change to a predetermined pattern.

In this case, the adding of the animation effect to the GUI element may include adding the animation effect of changing the shadow of the GUI element displayed on the first window to the predetermined pattern by sequentially changing a transition image element displayed on the second widow.

The transition image element may be displayed on a peripheral region of the GUI element on the second window so as to show an additional animation image on the peripheral region of the GUI element.

The transition image element may be displayed on the second window so as to add at least one of animation effects of changing color, changing shadow, and displaying an additional image with respect to the GUI element.

The method may further include, when the animation effect is finished, removing the second window, changing color of the GUI element displayed on the first window to a final change state, and displaying the GUI element.

The second window may be partially overlapped with only a region of an entire region of a screen, on which a GUI element to which the animation effect is to be added.

The event may be at least one of a first event of selecting the GUI element displayed on the first window, a second event of positioning a cursor on the GUI element displayed on the first window, a third event where a period of time corresponding to a predetermined frequency elapses, and a fourth event of turning-on or turning-off the display apparatus.

According to an aspect of another exemplary embodiment, there is provided a display apparatus for displaying a GUI element, the display apparatus including a display unit which displays at least one GUI element on a first window that is positioned on a screen; and a controller which generates a second window on which a transition image element corresponding to an event for controlling the GUI is displayed, and adds an animation effect to the GUI element by overlapping the second window with the first window.

The transition image element may be displayed to have the same size in the same position as the GUI element on the second window so that color of the GUI element appears to change to a predetermined pattern.

In this case, the controller may add the animation effect of sequentially changing color of the GUI element displayed on the first window by sequentially changing color of a transition image element displayed on the second window.

The transition image element may be displayed in a position corresponding to shadow of the GUI element on the second window so that the shadow of the GUI element appears to change to a predetermined pattern.

In this case, the controller may add the animation effect of changing the shadow of the GUI element displayed on the first window to the predetermined pattern by sequentially changing a transition image element displayed on the second widow.

The transition image element may be displayed on a peripheral region of the GUI element on the second window so as to show an additional animation image on the peripheral region of the GUI element.

The transition image element may be displayed on the second window so as to add at least one of animation effects of changing color, changing shadow, and displaying an additional image with respect to the GUI element.

When the animation effect is finished, the controller may control the display unit to remove the second window, to change color of the GUI element displayed on the first window to a final change state, and to display the GUI element.

The second window may be partially overlapped with only a region of an entire region of a screen, on which a GUI element to which the animation effect is to be added.

The event may be at least one of a first event of selecting the GUI element displayed on the first window, a second event of positioning a cursor on the GUI element displayed on the first window, a third event where a period of time corresponding to a predetermined frequency elapses, and a fourth event of turning-on or turning-off the display apparatus.

### BRIEF DESCRIPTION OF THE DRAWINGS

The above and/or other aspects will become more apparent by describing in detail exemplary embodiments with reference to the attached drawings in which:
FIG. 1 is a block diagram of a display apparatus according to an embodiment;
FIGS. 2A and 2B are structural views for describing windows, according to an embodiment;
FIGS. 3A and 3B are diagrams for describing a method of adding an animation effect, according to an embodiment;
FIGS. 4A and 4B are diagrams for describing a method of adding an animation effect, according to another embodiment;
FIGS. 5A and 5B are diagrams for describing a method of adding an animation effect, according to another embodiment;
FIG. 6 is a flowchart of a displaying method according to an embodiment; and
FIG. 7 is a detailed flowchart of a displaying method according to an embodiment.

### DETAILED DESCRIPTION

Certain exemplary embodiments will be described in detail with reference to the attached drawings.

Accordingly to an exemplary embodiment, a display apparatus includes a display unit and a controller. The display unit may display a first window including at least one graphic user interface (GUI) element on a screen. When an event for controlling the GUI element occurs, the controller may add an animation effect to the GUI element by generating a second window on which a transition image element corresponding to the event and overlapping the second window with the first window.

Hereinafter, a display apparatus will be described with regard to exemplary embodiments with reference to the attached drawings. The term "unit" as used herein means a hardware component and/or a software component that is executed by a hardware component such as a processor.

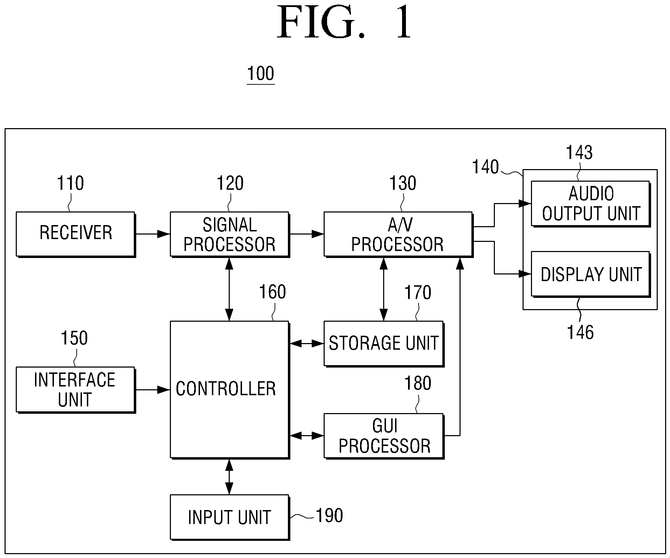

FIG. 1 is a block diagram of a display apparatus 100 according to an exemplary embodiment. Referring to FIG. 1, the display apparatus 100 may display at least one GUI element on a first window positioned on a screen. When an event for controlling the GUI element occurs, the display apparatus 100 may add an animation effect to the GUI element by generating a second window on which a transition image element corresponding to the event and overlapping the second window with the first window. In addition, when the animation effect is finished, the second window may be removed, the GUI element may be changed to a final change state, and then the GUI element may be displayed.

In this case, a window is a graphic layer that is added to the screen on which an image is displayed, and may display a GUI element or a transition image element may be displayed.

The transition image element is an image element that makes it look as if color and shadow of the GUI element vary, or an image element that makes it look as if an additional animation image is added to a peripheral region of the GUI element.

In addition, the event may refer to a user command for selecting a GUI element to be displayed on the first window, a user command for positioning a cursor on the GUI element to be displayed on the first widow, an event where a period of time corresponding to a predetermined frequency elapses, and an event of turning-on or turning-off a display apparatus.

Accordingly, the display apparatus 100 may provide an animation effect of changing color and shadow of the GUI element and showing additional images on a peripheral region of the GUI element by overlapping the GUI element and the transition image that are respectively displayed on different windows.

As shown in FIG. 1, the display apparatus 100 for performing the above functions includes a receiver 110, a signal processor 120, an audio/video (A/V) processor 130, an output unit 140, an interface unit 150, a controller 160, a storage unit 170, a GUI processor 180, and an input unit 190.

The receiver 110 receives a broadcasting signal from a broadcasting station or a satellite wired and wireless, and demodulates the broadcasting signal. In detail, the receiver 110 may be embodied by at least one tuner. If necessary, the receiver 110 may include a plurality of tuners, and may simultaneously receive broadcasting signals from a plurality of channels.

The signal processor 120 divides the broadcasting signal into an image signal, an audio signal, and broadcasting information. The signal processor 120 transmits the image signal and the audio signal to the A/V processor 130, and transmits the broadcasting information to the storage unit 170, the controller 160, and the GUI processor 180.

The A/V processor 130 performs signal-processing such as video decoding, video scaling, or audio decoding on the image signal and the audio signal that are input to the A/V processor 130 from the signal processor 120 and the interface unit 150. In addition, the A/V processor 130 outputs the image signal to a display unit 146, and outputs the audio signal to an audio output unit 143.

On the other hand, when the image signal and the audio signal are stored in the storage unit 170 or are transmitted to an external device through an interface unit (not shown), the A/V processor 130 outputs the image signal and the audio signal in a compression form to the storage unit 170 or the interface unit 150.

The output unit 140 includes the audio output unit 143, and the display unit 146.

The audio output unit 143 outputs audio output from the A/V processor 130 through a speaker, or outputs the audio to an external device (e.g., an external speaker) that is connected to the audio output unit 143 through an external output terminal.

The display unit 146 displays an image output from the A/V processor 130, or outputs the image to an external device (e.g., an external speaker) that is connected to the display unit 146 through an external output terminal.

In particular, the display unit 146 may display a plurality of windows generated by the GUI processor 180 on a screen. In detail, the display unit 146 may overlap a window including a GUI element and a second window including a transition image, and may display the first and second windows on the screen on which the image is displayed.

The interface unit 150 connects the display apparatus 100 to an external server, or another image device, or a communication network such as the Internet, in order to receive various pieces of information about various transition image elements.

The storage unit 170 stores information about the GUI element, the transition image, and additional image elements that are generated by the GUI processor 180 or are received from an external source.

The GUI processor 180 generates a GUI to be displayed on the screen, and adds the GUI to the image output by the A/V processor 130.

In detail, the GUI processor 180 may generate a GUI element such as an icon, a button, a cursor, or the like, and may generate a transition image element for adding an animation effect to the GUI element. In addition, the GUI processor 180 includes a widow generating unit (not shown) so as to generate the first window that is added to the screen on which the image is output, and the second window added to the first window.

In particular, the GUI processor 180 may generate a transition image element that has the same size of the GUI element and has at least one different color from the GUI color, a transition image element having shadow that has at least one different shape in order to make it to look as if the shadow of the GUI element is changed to a predetermined pattern, and a transition image element that has at least one different shape or color in order to show an image added to the GUI element, in order to make it to look as if colors of the GUI element are changed to a predetermined pattern.

In addition, when the animation effect is finished, the GUI processor 180 may generate a GUI element that displays a final change state. In detail, the GUI processor 180 may generate a GUI element having changed color, a GUI element having a convex shape or a pressed shape, a GUI element including an additional image, and the like.

The input unit 190 may be configured to receive manipulation (e.g., a zapping command) of users, and may be embodied by a manipulation panel including a number button, a channel search button (channel-up button/channel-down button), an audio control button, and a cursor control button, or may be embodied as a remote controller receiver for receiving an operational signal of a remote controller separate from the display apparatus 100, for transmitting manipulation of a user.

In addition, the input unit 190 transmits the manipulation of the user to the controller 160.

The controller 160 identifies a user command based on the manipulation of the user that is transmitted from the input unit 190, and controls an overall operation of each component of the display apparatus 100.

In particular, the controller 160 may generate the first window and the second window by controlling the GUI processor 180, and may add the first window and the second window on the screen on which the image is displayed. In detail, the controller 160 may add the first window to a main window on which the image output from the A/V processor 130 is displayed, and may add the second window to the first window. Thus, the first window and the second window may overlap each other, and may be realized on the main window.

The controller 160 may display a GUI element on the first window. In detail, the controller 160 may display a frame illustrating the GUI as an element, such as a button, an icon, a cursor, or the like on the first window. In this case, the GUI element may be displayed on a predetermined region of the first window.

When an event for controlling the GUI element occurs, the controller 160 may display a frame illustrating a transition image element on the second window in order to add an animation effect corresponding to the event to the GUI element.

In this case, the event for controlling the GUI element may be at least one of an event of selecting the GUI element displayed on the first window, an event of positioning a cursor on the GUI element displayed on the first window, an event where a period of time corresponding to a predetermined frequency elapses, and an event of turning-on or turning-off a display apparatus. However, it is understood that the events are not limited to the examples listed above.

In detail, in order to add the animation effect to the GUI element, the controller 160 may sequentially change a color of the transition image element, and may display the transition image element on the second window. That is, the controller 160 may sequentially display transition image elements having at least one different color on the second window. In this case, the transition image element is displayed to have the same size in the same position as the GUI element.

In order to add an animation effect of changing shadow to the GUI element, the controller 160 may sequentially change a shape of the transition image element, and may display the transition image element on the second window. That is, the controller 160 may sequentially display transition image elements having at least one different shape on the second window. In this case, the transition image element is displayed in a position corresponding to the shape of the GUI element.

In addition, in order to add an animation effect of generating an additional image to a peripheral region of the GUI element, the controller 160 may sequentially change color and shadow of the transition image element, and may display the transition image element on the second window. That is, the controller 160 may sequentially display transition image elements having at least one different color and shape on the second window. In this case, the transition image element is displayed in a position corresponding to the peripheral region of the GUI element.

In addition, in order to add at least one of the animation effects of changing color, changing shadow, and displaying an additional image with respect to the GUI element, the controller 160 may sequentially display a transition image element on the second window. That is, the controller 160 may combine transition image elements for adding the animation effects of changing color, changing shadow, and displaying an additional image with respect to the GUI element, and may display the combined transition image elements on the second window.

The controller 160 may generate the second window only in a region of the screen, on which the GUI element to which an animation effect is to be added is positioned. In detail, the controller 160 may divide the second window into a plurality of regions, and may display a frame about a transition image element only in a region corresponding to the region on which the GUI element is positioned.

The controller 160 may overlap and display the first window and the second widow on the main window, as described above. In this case, the controller 160 may adjust transparency of the second window by using an alpha blending method so as to add an animation effect to a GUI element displayed on the first window by using a transition image element displayed on the second window.

In this case, the alpha blending method is a method of simultaneously displaying a plurality of images on a single screen by setting an alpha value for adjusting transparency to a graphic layer and the adjusting transparency of overlapped images by using the alpha value.

In detail, when a GUI element displayed on the first window and a transition image element displayed on the second window overlap each other, the controller 160 may adjust transparency of the second window so that the GUI element and the transition image element may overlap each other and may be displayed.

When an animation effect is finished, the controller 160 may remove the second window, may change a GUI element to a final change state, and then may display the GUI element on the first window.

In this case, the final change state may be changed according to an animation effect added to the GUI element. In detail, with regard to the animation effect of making it to look as if colors of the GUI element are changed to a predetermined pattern, the final change state may be a state where color of the GUI element is changed. With regard to the animation effect of making it to look as if shadow of the GUI element is changed to a predetermined pattern, the final change state may be a GUI element having a convex state or a pressed state, compared to the GUI element to which the animation effect is not added. Lastly, with regard to the animation effect of making it to look as if an additional animation image is added to a peripheral region of the GUI element, the final change state may be a GUI element having the same state as the GUI element to which the animation effect is not added, or a GUI element to which a predetermined image is added.

In FIG. 1, when a display apparatus is turned on or turned off, or when a period of time corresponding to a predetermined frequency elapses, an animation effect is added to a GUI element. In this case, the animation effect may be added to all GUI elements displayed on the first window, or may be sequentially added from a predetermined GUI element, which may be set by a user.

So far, a method of displaying a transition image element for adding an animation effect to a single window has been described, but is a just an example. That is, at least one window may be added to the second window, another transition image element may be displayed on the added window, and three or more windows overlap each other so as to add an animation effect to an GUI element.

In FIG. 1, by virtue of animation effects, color of a GUI element is changed, shadow of the GUI element is change, and an additional image is displayed. However, this is just an example. Alternatively, a transition image element, which makes it to look as if the position, shape and display direction of the GUI element are change to a predetermined pattern, may be displayed on the second window.

For example, in order to obtain the animation effect of making it look as if the shape of the GUI element displayed on the first window is changed, a transition image element having a different shape from the GUI image may be added to the second window that is overlapped with the first window. In this case, only the shape of the GUI image may be changed by the transition image element by adjusting transparency of the second window.

The display apparatus 100 is an apparatus for displaying a GUI element, and may be embodied as a digital television (TV), but is not limited thereto. The display apparatus 100 may be embodied as a cellular phone, a portable multimedia player (PMP), a MP3 player, a personal computer (PC), or the like.

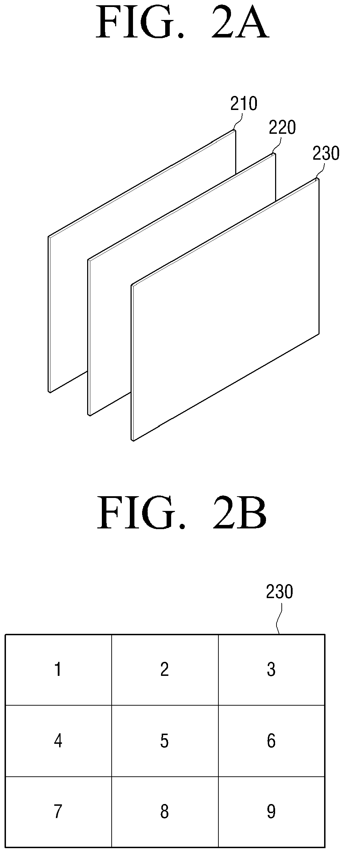

FIGS. 2A and 2B are structural views for describing windows, according to an exemplary embodiment. Referring to FIG. 2A, a window is a graphic layer. Three different windows may overlap each other. That is, a display apparatus according to the present exemplary embodiment may add a first window 220 to a main window 210 on which an image is output, and may add a second window 230 to the first window 220. In this case, a GUI element is displayed on the first window 220, and a transition image element is displayed on the second window 230. As shown in FIG. 2B, the second window 230 may be generated to have a plurality of divided regions. Thus, a frame including a transition image element may be displayed only in a region corresponding to a region on which the GUI element is displayed.

In FIGS. 2A and 2B, the second window 230 is divided into nine regions, but this is a just an example. That is, according to a size of the main window 210 and a position where the GUI image is displayed, the second window 230 may be divided into a plurality of regions of which the number is higher or lower than nine.

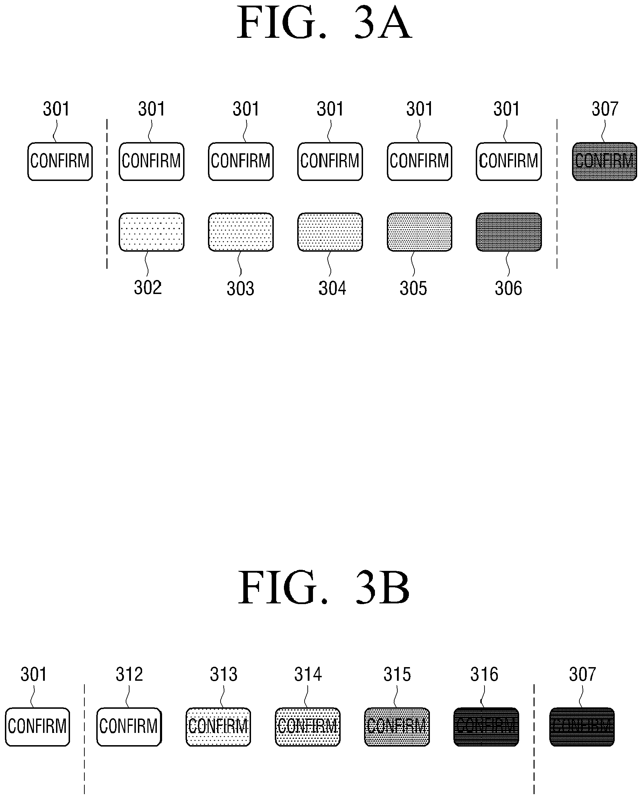

FIGS. 3A and 3B are diagrams for describing a method of adding an animation effect to a GUI element, according to an exemplary embodiment. In FIGS. 3A and 3B, a method of adding an animation effect to a GUI element so as to make it look as if the color of the GUI element is changed to a predetermined pattern will be described as an example.

To this end, as shown in FIG. 3A, a basic frame including a GUI element 301 about an icon 'confirm' having a predetermined color is displayed on a first window. Then, when an event for controlling a GUI element occurs, frames including transition image elements 302 through 306 having at least one different color are sequentially displayed on a second window.

In this case, each of transition image elements 302 through 306 has the same size as the GUI element 301 about the icon 'confirm', and are displayed in the same position as the GUI element 301 on the second window. In this case, when transparency of the second window is adjusted, the GUI element 301 about the icon 'confirm' and the transition image elements 302 through 306 that are sequentially displayed may overlap each other and may be displayed for each respective frame, thereby obtaining an animation effect.

When the animation effect is finished, the second window is removed, color of the GUI element 301 is changed to a final change state, and the final GUI element 307 is displayed on the first window.

As a result, as shown in FIG. 3B, a user may sequentially view an image frame including the GUI element 301 about the icon 'confirm' having predetermined color, an image frame including the transition image elements 312 through 316 obtained by overlapping the transition image elements 302 through 306 and the GUI element 301 about the icon 'confirm', and an image frame including the final GUI element 307 about icon 'confirm' of which color is finally changed. Accordingly, the user may obtain a visual effect of changing color of a GUI element to a predetermined pattern.

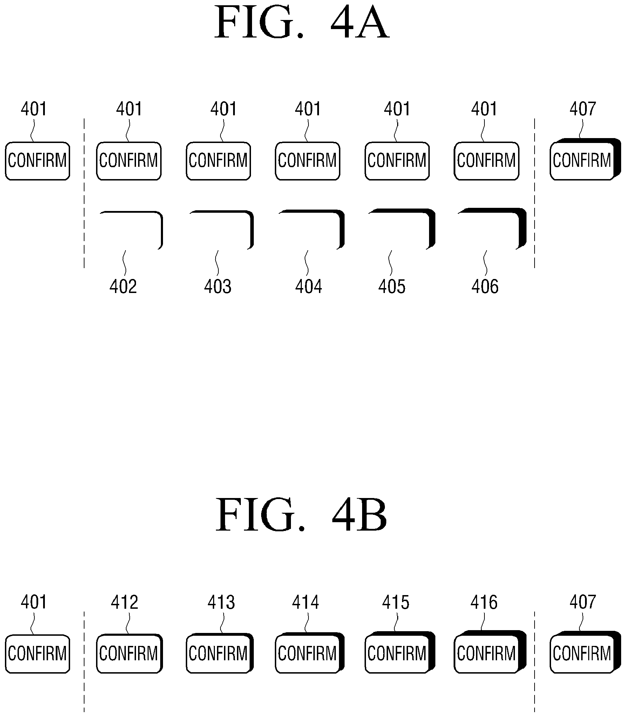

FIGS. 4A and 4B are diagrams for describing a method of adding an animation effect to a GUI element, according to another exemplary embodiment. In FIGS. 4A and 4B, a method of adding an animation effect to a GUI element so as to make it look as if a shadow of the GUI element is changed to a predetermined pattern will be described as an example.

To this end, as shown in FIG. 4A, a basic frame including a GUI element 401 about an icon 'confirm' is displayed on a first window. Then, when an event for controlling a GUI element occurs, frames including transition image elements 402 through 406, which indicate at least one different shape corresponding to shadow, that is, a state that varies as a time elapses, are displayed on a second window.

In this case, each of transition image elements 402 through 406 are displayed in a position corresponding to shadow of the GUI element 401 about the icon 'confirm' on the second window. In this case, when transparency of the second window is adjusted, the GUI element 401 about the icon 'confirm' and the transition image elements 402 through 406 that are sequentially displayed may overlap each other and may be displayed for each respective frame, thereby obtaining an animation effect.

When the animation effect is finished, the second window is removed, a shape of the GUI element 401 is changed to a final change state, and the final GUI element 407 is displayed on the first window. In this case, the GUI element in the final change state may be the icon 'confirm' having a convex shape.

As a result, as shown in FIG. 4B, a user may sequentially view an image frame including the GUI element 401 about the icon 'confirm', an image frame including the transition image elements 412 through 416 obtained overlapping the transition image elements 402 through 406 and the GUI element 401 about the icon 'confirm', and an image frame including the final GUI element 407 about the icon 'confirm' having a convex shape. Accordingly, the user may obtain a visual effect of changing shadow of a GUI element to a predetermined pattern.

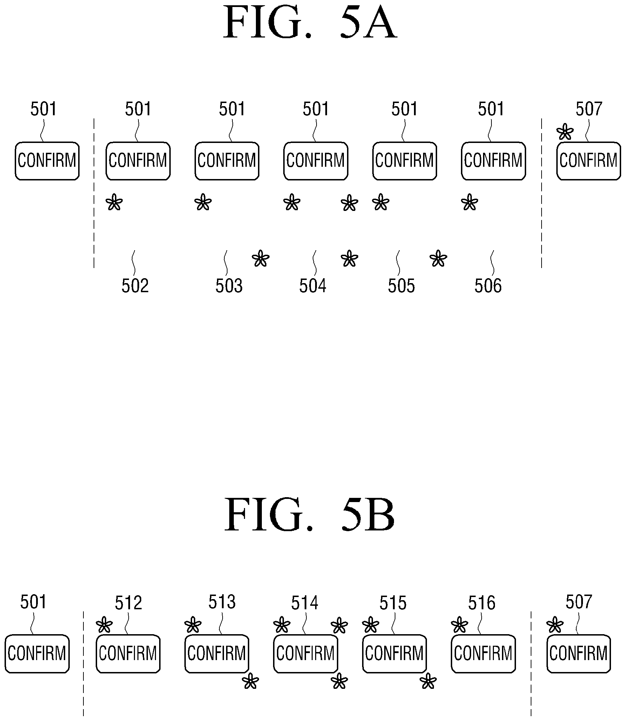

FIGS. 5A and 5B are diagrams for describing a method of adding an animation effect to a GUI element, according to another exemplary embodiment. In FIGS. 5A and 5B, a method of adding an animation effect such as adding an additional image to a peripheral region of a GUI element will be described as an example.

As shown in FIGS. 5A and 5B, each of transition image elements 502 through 506 is displayed in a position corresponding to the peripheral region of a GUI element 501 about an icon 'confirm' on the second window. In addition, since an image frame including image 512 through 516 obtained by overlapping the first window and the second window is sequentially displayed, a user may obtain a visual effect of displaying an additional image to the peripheral region of a GUI element about an icon 'confirm'.

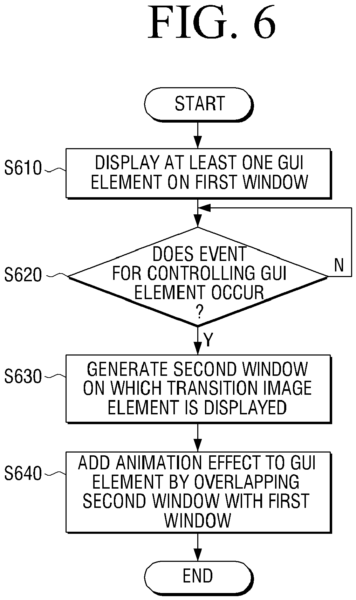

FIG. 6 is a flowchart of a displaying method according to an exemplary embodiment.

First, at least one GUI element is displayed on a first window positioned on a screen (S610). In this case, the GUI element may be an icon, a button, a cursor, or the like.

Then, when an event for controlling the GUI element occurs (S620-Y), a second window on which a transition image element corresponding to the event is generated (S630).

In this case, the transition image element may have various shapes, and may be positioned in different positions, according to an animation effect to be added to the GUI element.

In detail, in order to make it look as if the color of the GUI element is changed to a predetermined color, the GUI element having at least one different color may be displayed to have the same size in the same position as the GUI element on the second window. In order to make it to look as if the shadow of the GUI element is changed to a predetermined color, the GUI element having a shape that varies according to the shadow of the GUI element is displayed in a position corresponding to the shadow of the GUI element. In order to add an additional animation image on a peripheral region of the GUI element, the GUI element may be displayed as an additional image in a position corresponding to the peripheral region of the GUI element on the second window. In addition, theses animation effects may overlap each other, and may be added to the GUI element.

Then, the second window is overlapped with the first window so as to add an animation effect to the GUI element (S640). In this case, the animation effect of sequentially changing color of the GUI element may be added by sequentially changing color of a transition image element displayed on the second window. In addition, an animation effect of changing shadow of the GUI element displayed on the first window to a predetermined pattern may be obtained by sequentially changing a transition image element about shadow of the GUI element.

When the animation effect is finished, the second window is removed, the GUI element displayed on the first window is changed to a final change state, and the final GUI element is displayed. In detail, color of the GUI element may be changed to a final change state, or the GUI element may be changed to a final change state obtained by adding shadow to the GUI element, and the final GUI element may be displayed. Alternatively, the final GUI element that is the same as the original GUI element may be displayed.

In operation S610, the second window may be partially overlapped with only a region of an entire region of a screen, on which the GUI element to which an animation effect is to be added. That is, the second window is divided into a plurality of regions. A frame including a transition image element may be displayed only on a region corresponding to a position where the GUI element is positioned, from among the divided regions.

In operation S620, the event may be at least one of an event of selecting the GUI element displayed on the first window, an event of positioning a cursor on the GUI element displayed on the first window, an event where a period of time corresponding to a predetermined frequency elapses, and an event of turning-on or turning-off a display apparatus.

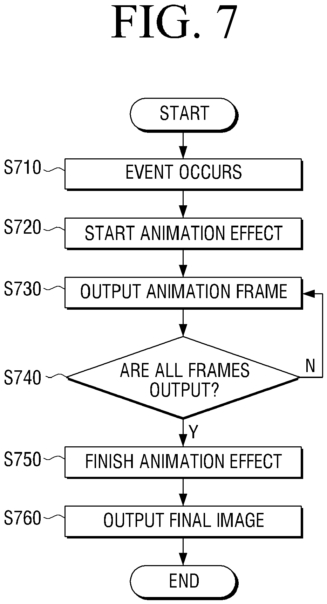

FIG. 7 is a detailed flowchart of a displaying method according to an exemplary embodiment.

First, when an event for controlling a GUI element displayed on a first window occurs (S710), an operation for obtaining an animation effect is started (S720). In detail, a second window, on which a transition image element for adding an animation effect to the GUI element is displayed, is generated, and the second window is added to the first window.

Then, a frame (that is, an animation frame) including a transition image element for adding a corresponding animation effect is output and displayed (S730). In detail, until all animation frames are output, the animation frames are sequentially displayed on the second window (S740).

When all animation frames are sequentially displayed, the operation for obtaining an animation effect is finished (S750), and then, the second window is removed.

Then, a GUI element corresponding to a final change state (that is, a final image of the GUI element) is output (S760).

As described above, according to the exemplary embodiments, a separate window for adding an animation effect is generated, thereby preventing a side effect of shaking an icon to which an animation effect is not added when the method is used, and easily realizing the animation effect in a display apparatus with specifications.

The above-described methods may be used in a display apparatus according to an exemplary embodiment, and may be used in other apparatuses that include some components of the display apparatus.

The aspects of the exemplary embodiments can also be embodied as computer readable codes on a non-transitory computer readable recording medium. The non-transitory computer readable recording medium is any data storage device that can store data which can be thereafter read by a computer system. Examples of the non-transitory computer readable recording medium include read-only memory (ROM), random-access memory (RAM), CD-ROMs, magnetic tapes, floppy disks, optical data storage devices, etc. The non-transitory computer readable recording medium can also be distributed over network coupled computer systems so that the computer readable code is stored and executed in a distributed fashion.

While certain aspects have been particularly shown and described with reference to exemplary embodiments thereof, it will be understood by those of ordinary skill in the art that various changes in form and details may be made therein without departing from the spirit and scope of the inventive concept as defined by the following claims.

## Claims

1. A display apparatus for displaying a graphic user interface (GUI) element, the display apparatus comprising:
a display unit which displays at least one GUI element on a first window that is positioned on a screen; and
a controller which generates a second window on which a transition image element corresponding to an event for controlling the GUI element is displayed, and adds an animation effect to the GUI element by overlapping the second window with the first window.

2. The display apparatus of claim 1, wherein the transition image element is displayed to have a same size in a same position as the GUI element on the second window so that a color of the GUI element appears to change to a predetermined pattern.

3. The display apparatus of claim 2, wherein the controller adds the animation effect of sequentially changing the color of the GUI element displayed on the first window by sequentially changing a color of the transition image element displayed on the second window.

4. The display apparatus of anyone of claims 1 to 3, wherein the transition image element is displayed in a position corresponding to a shadow of the GUI element on the second window so that the shadow of the GUI element appears to change to a predetermined pattern.

5. The display apparatus of claim 4, wherein the controller adds the animation effect of changing the shadow of the GUI element displayed on the first window to the predetermined pattern by sequentially changing the transition image element displayed on the second widow.

6. The display apparatus of anyone of claims 1 to 5, wherein the transition image element is displayed on a peripheral region of the GUI element on the second window so as to show an additional animation image on the peripheral region of the GUI element.

7. The display apparatus of anyone of claims 1 to 6, wherein the transition image element is displayed on the second window so as to add at least one of animation effects of changing color, changing shadow, and displaying an additional image with respect to the GUI element.

8. The display apparatus of anyone of claims 1 to 7, wherein, when the animation effect is finished, the controller controls the display unit to remove the second window, to change color of the GUI element displayed on the first window to a final change state, and to display the GUI element.

9. The display apparatus of anyone of claims 1 to 8, wherein the second window is partially overlapped with only a region of an entire region of the screen, on which the GUI element to which the animation effect is to be added.

10. The display apparatus of anyone of claims 1 to 9, wherein the event is at least one of a first event of selecting the GUI element displayed on the first window, a second event of positioning a cursor on the GUI element displayed on the first window, a third event where a period of time corresponding to a predetermined frequency elapses, and a fourth event of turning-on or turning-off the display apparatus.

11. A method of displaying a graphic user interface (GUI) element in a display apparatus, the method comprising:
displaying at least one GUI element on a first window that is positioned on a screen;
generating a second window on which a transition image element corresponding to an event for controlling the GUI element is displayed; and
adding an animation effect to the GUI element by overlapping the second window with the first window.

12. The method of claim 11, wherein the transition image element is displayed to have a same size in a same position as the GUI element on the second window so that a color of the GUI element appears to change to a predetermined pattern.

13. The method of claim 12, wherein the adding the animation effect comprises sequentially changing color of the GUI element displayed on the first window by sequentially changing color of the transition image element displayed on the second window.

14. The method of anyone of claims 11 to 13, wherein the transition image element is displayed in a position corresponding to a shadow of the GUI element on the second window so that the shadow of the GUI element appears to change to a predetermined pattern.

15. The method of claim 14, wherein the adding the animation effect to the GUI element comprises changing the shadow of the GUI element displayed on the first window to the predetermined pattern by sequentially changing the transition image element displayed on the second widow.
